# DEMANDE DE BREVET EUROPEEN

(11) **EP 1 596 614 A1**
(43) Date de publication de la demande: **16.11.2005**
(21) Numéro de dépôt: 05290972.8
(22) Date de dépôt: 04.05.2005
(51) Int. Cl.: H04Q 7/22, H04L 12/56

(54) **Gestion de la mobilité d'un terminal inactif dans un réseau mobile en mode paquets**

(30) Priorité: 10.05.2004 FR 0405041
(71) Demandeur: ALCATEL, 75008 Paris (FR)
(72) Inventeur: Guillon, Jacques, 95000 Sannois (FR); Desorbay, Eric, 44750 Campbon (FR); Comby, Xavier, 78530 Buc (FR); Vautey, Bernard, 92260 Fontenay-aux-Roses (FR)
(74) Mandataire: El Manouni, Josiane

(57) **Abrégé**

Un des objets de la présente invention est un procédé pour améliorer la gestion de mobilité dans un système de communications mobiles en mode paquet, procédé dans lequel une station mobile attachée au réseau est implicitement détachée du réseau si au moins un critère est vérifié, correspondant à un critère d'inactivité de cette station mobile.

## Description

La présente invention concerne d'une manière générale les systèmes de communications mobiles.

D'une manière générale, les systèmes de communications mobiles font l'objet de normalisation, et pour une description complète de ces systèmes on pourra se référer aux normes correspondantes, publiées par les organismes de normalisation correspondants.

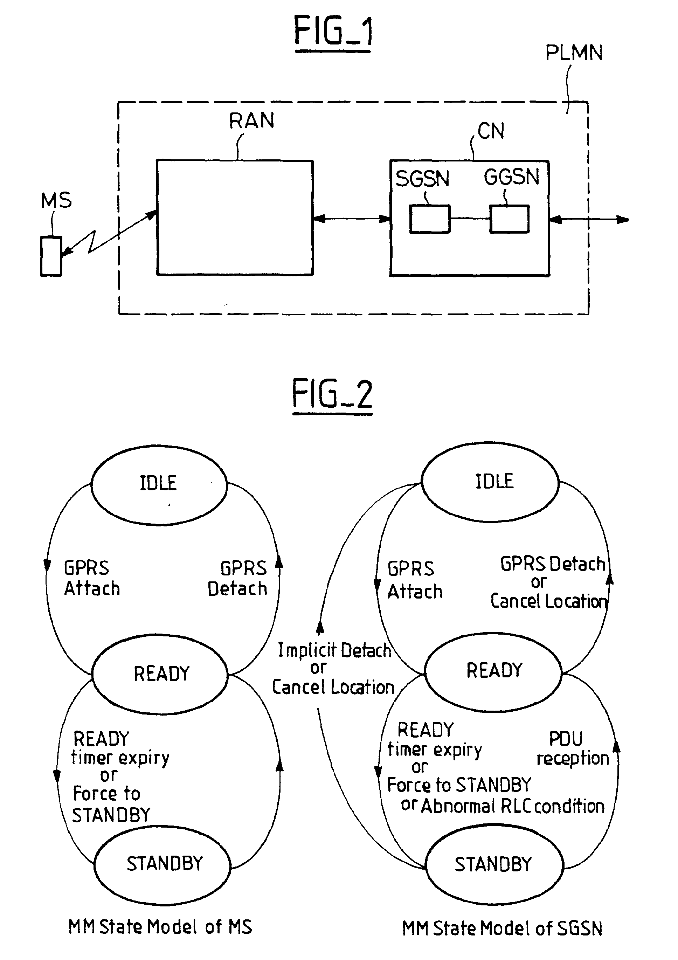

L'architecture générale d'un système de communications mobiles est brièvement rappelée en relation avec la figure 1. Le système comporte un réseau de communications mobiles ou PLMN (« Public Land Mobile Network ») comportant lui-même:
- un réseau d'accès radio, ou RAN (« Radio Access Network »), en charge principalement de fournir à des stations mobiles ou MS (« Mobile Station ») un accès radio à des services de communications mobiles,
- un réseau coeur, ou CN (« Core Network »), en charge principalement de la gestion des communications et de leur routage, notamment via des réseaux extérieurs (non illustrés sur cette figure).

Dans ces systèmes, on distingue deux modes possibles : le mode circuit (non représenté sur la figure) et le mode paquet. Le mode paquet, contrairement au mode circuit, se caractérise par un partage dynamique en cours de session des ressources entre les utilisateurs, d'où une utilisation plus efficace des ressources disponibles.

L'architecture de réseau coeur pour un système supportant des services en mode paquet, tel que notamment le GPRS ("General Packet Radio Service") est rappelée sur la figure 1 ; on distingue, notamment :
- des éléments de réseau de type SGSN («Serving GPRS Support Node »), ayant principalement, pour les stations mobiles MS, un rôle de serveur d'accès à des services de communications mobiles en mode paquet,
- des éléments de réseau de type GGSN (« Gateway GPRS Support Node »), ayant principalement un rôle de routage et de connexion avec des réseaux externes ou réseaux de données en mode paquet ou PDN (« Packet Data Network »), tels que notamment des réseaux IP (« Internet Protocol »).

Pour qu'une station mobile puisse accéder à des services en mode paquet, par exemple dans un système de type GPRS, il est nécessaire qu'elle ait préalablement effectué une procédure dite d'attachement GPRS (ou « GPRS Attach »). En résultat de cette procédure, un lien logique est créé entre la station mobile et son SGSN serveur, et des contextes de mobilité, ou contextes MM (où MM est utilisé pour « Mobility Management ») sont établis dans la station mobile et dans son SGSN serveur, de tels contextes contenant l'ensemble des informations nécessaires à la gestion de la mobilité de cette station mobile (incluant des informations d'identité d'utilisateur, de localisation, d'authentification, ...etc.).

Pour que des données puissent être émises ou reçues pour une session de connexion en mode paquet, il est en outre nécessaire qu'une procédure d'activation de contexte PDP (« Packet Data Protocol ») ait été mise en oeuvre. En résultat de cette procédure, des contextes PDP sont établis, notamment dans la station mobile et dans son SGSN serveur, de tels contextes contenant l'ensemble des informations nécessaires au routage et à la gestion de la qualité de service pour cette connexion en mode paquet.

Dans ce qui suit, on s'intéresse plus particulièrement aux fonctions de gestion de mobilité mises en oeuvre à l'intérieur de tels systèmes. On rappelle tout d'abord brièvement certaines de ces fonctions ; pour une description plus complète, on pourra se référer par exemple, pour un système de type GPRS, aux spécifications 3GPP TS 23.060 et 3GPP TS 24.008 publiées par le 3GPP (« 3^{rd} Generation Partnership Project »).

On rappelle que, notamment dans un but de gestion de mobilité des utilisateurs, les cellules d'un réseau donné sont généralement regroupées en sous-ensembles appelés zones de routage (ou RA, pour « Routing Area ») dans le cas du GPRS par exemple.

On rappelle également que les protocoles de gestion de mobilité incluent notamment des procédures de mise à jour de cellule ou de zone de routage, par lesquelles une station mobile informe son SGSN serveur lorsqu'elle change de cellule ou de zone de routage.

On rappelle également que, dans le cadre de la gestion de mobilité, on définit trois états de gestion de mobilité possibles : « Idle », « Ready », et « Standby ». Ces différents états, ainsi que les mécansimes de transition entre états, dans la station mobile et dans le SGSN, sont rappelés sur la figure 2, reprise en l'occurrence de la spécification 3GPP TS 03.60 précitée.

Dans l'état « Idle » le contexte MM enregistré dans le SGSN ne contient aucune information de localisation valide pour la station mobile.

Dans l'état « Standby », le contexte MM enregistré dans le SGSN contient des informations de localisation valides pour la station mobile, et ces informations contiennent seulement l'identité de la zone de routage dans laquelle est localisée la station mobile.

Dans l'état « Ready », le contexte MM enregistré dans le SGSN contient des informations de localisation valides pour la station mobile, et ces informations contiennent l'identité de la cellule dans laquelle est localisée la station mobile.

Le passage de l'état « Idle» à l'état « Ready » est effectué en utilisant la procédure de « GPRS Attach». Inversement, la procédure dite de « GPRS Detach» permet de passer de l'état « Ready» à l'état « Idle ».

Le passage de l'état « Ready» à l'état « Standby » peut être effectué notamment à l'expiration d'une temporisation, ou temporisation associée à l'état « Ready » (ou « Ready timer »). Inversement, un passage de l'état « Standby» à l'état « Ready » est effectué si des données sont à transmettre ou à recevoir par cette station mobile.

Le passage de l'état « Standby » à l'état « Idle » sur initiative du réseau peut être effectué dans le cas où la station mobile est implicitement détachée du réseau (ce qui est aussi appelé « Implicit Detach ») ou dans le cas où le SGSN reçoit d'une base de données d'utilisateurs (telle que HLR « Home Location Register » un message appelé « MAP Cancel Location ». Les contextes MM enregistrés dans le SGSN sont effacés dans le deuxième cas, et peuvent être effacés dans la premier cas. Généralement, un détachement implicite est effectué à l'expiration d'une autre temporisation, ou temporisation associée à l'état « Standby », ou dans le cas d'erreur irrécupérable dû à un problème de propagation radio.

Un problème général dans ces systèmes est le volume de mémoire nécessaire dans le réseau pour l'enregistrement de contextes, notamment le volume de mémoire nécessaire dans le SGSN pour l'enregistrement de contextes de mobilité, pour un grand nombre de stations mobiles simultanément attachées. Le volume de mémoire disponible étant en pratique limité, la capacité du système peut alors se trouver limitée.

Ainsi que l'a observé le demandeur, ce problème se pose avec une acuité particulière dans le cas de modèle de trafic caractérisé par peu de trafic utile et beaucoup de trafic de signalisation lié aux fonctions de gestion de mobilité, ce qui peut se produire notamment dans les débuts de la mise en service de ces sytèmes. La capacité du système peut alors se trouver limitée, simplement pour pouvoir supporter des utilisateurs qui ne génèrent pas de trafic utile, mais seulement du trafic de signalisation lié aux fonctions de gestion de mobilité.

On comprend qu'une telle limitation de capacité n'est pas satisfaisante pour les opérateurs, pour lesquels il est important de pouvoir accepter davantage de trafic utile sans sur-dimensionner le réseau (notamment sans sur-dimensionner le volume mémoire nécessaire dans le SGSN pour enregistrer des contextes de mobilité).

Un autre problème est que le modèle de trafic peut évoluer dans le temps, notamment la part de trafic utile peut être amenée à croître progressivement.

Ainsi que l'a observé le demandeur, l'état de la technique ne permet pas de résoudre ces problèmes et/ou de répondre à ces besoins de manière optimale.

Comme rappelé ci-dessus, la norme prévoit certains cas (notamment le cas de détachement implicite) où les contextes MM enregistrés dans le SGSN peuvent être effacés, et où par conséquent les ressources mémoire peuvent être mieux utilisées. Cependant, ainsi que l'a observé le demandeur, le cas de détachement implicite n'est pas actuellement traité de manière optimale, notamment car il est appliqué de manière uniforme pour toutes les stations mobiles, sans tenir compte de leurs besoins réels.

En outre, un autre problème est de gérer la manière dont les stations mobiles implicitement détachées devraient se rattacher au réseau. Ainsi que l'a également observé le demandeur, l'état de la technique ne permet pas non plus de résoudre ce problème de manière optimale.

Dans l'état actuel de la norme, une station mobile est informée qu'elle a été implicitement détachée par le réseau, au moyen d'une cause de rejet correspondante reçue en réponse à une requête de mise à jour de zone de routage (ou « RAU request », où RAU est utilisé pour « Routing Area Update »). Dans l'état actuel de la norme, il est par ailleurs prévu que la station mobile doit alors effectuer une nouvelle procédure d'attachement GPRS (ou « GPRS Attach »).

Ainsi que l'a également observé le demandeur, un tel critère de ré-attachement n'est pas optimal, notamment car il est appliqué de manière uniforme pour toutes les stations mobiles, sans tenir compte de leurs besoins réels, ce qui peut conduire à rétablir inutilement des contextes de mobilité pour des stations mobiles inactives (ou non suceptibles de générer du trafic utile), et donc à utiliser inutilement des ressources mémoire et/ou des ressources de traitement dans le réseau.

La présente invention a notamment pour but d'éviter tout ou partie de ces inconvénients et/ou de résoudre tout ou partie de ces problèmes. Plus généralement un des buts de la présente invention est d'améliorer la gestion de mobilité dans ces systèmes.

Un des objets de la présente invention est un procédé pour améliorer la gestion de mobilité dans un système de communications mobiles en mode paquet, procédé dans lequel une station mobile attachée au réseau est implicitement détachée du réseau si au moins un critère est vérifié, correspondant à un critère d'inactivité de cette station mobile.

Suivant une autre caractéristique, une station mobile attachée au réseau est implicitement détachée du réseau si en outre un autre critère est vérifié, correspondant à un manque de ressources mémoire dans le réseau pour enregistrer des contextes de gestion de mobilité.

Suivant une autre caractéristique, ledit critère d'inactivité est vérifié pour une station mobile, si cette station mobile n'est pas susceptible de générer du trafic utile.

Suivant une autre caractéristique, ledit critère d'inactivité est vérifié pour une station mobile, si aucun contexte PDP n'est actif pour cette station mobile.

Suivant une autre caractéristique, ledit critère d'inactivité n'est pas vérifié pour une station mobile, si un contexte PDP actif pour cette station mobile est de type signalisation pour l'IMS (« IP Multimedia Subsystem »).

Suivant une autre caractéristique, une station mobile attachée au réseau est implicitement détachée du réseau si en outre un autre critère est vérifié, correspondant au passage par un état de gestion de mobilité correspondant à un état « Standby ».

Un autre objet de la présente invention est un procédé pour améliorer la gestion de mobilité dans un système de communications mobiles en mode paquet, procédé dans lequel une procédure est mise en oeuvre pour le ré-attachement au réseau d'une station mobile implicitement détachée du réseau si au moins un critère est vérifié, correspondant à un critère d'activité de cette station mobile.

Suivant une autre caractéristique, ledit critère d'activité est vérifié pour une station mobile, si cette station mobile est susceptible de générer du trafic utile.

Suivant une autre caractéristique, ledit critère d'activité est vérifié, si le réseau reçoit de cette station mobile une requête d'accès à des services.

Un autre objet de la présente invention est un procédé pour améliorer la gestion de mobilité dans un système de communications mobiles en mode paquet, procédé dans lequel une procédure est mise en oeuvre pour le ré-attachement au réseau d'une station mobile implicitement détachée du réseau, ladite procédure pour le ré-attachement au réseau de la station mobile comportant des étapes selon lesquelles :
- à réception d'une requête de mise à jour de zone de routage transmise par une station mobile, le réseau envoie un message d'acceptation de mise à jour de zone de routage,
- lorsque la station mobile tente ensuite une transaction avec le réseau pour un accès à des services, le réseau transmet à la station mobile un message incluant une requête de ré-attachement au réseau, forçant ainsi la station mobile à se ré-attacher au réseau pour cette transaction.

Suivant une autre caractéristique, ledit message incluant une requête de ré-attachement au réseau correspond à une requête de détachement (« Detach request ») incluant un type de détachement (« Detach type ») correspondant à un re-attachement requis (« Re-attach required »).

Un autre objet de la présente invention est un procédé pour améliorer la gestion de mobilité dans un système de communications mobiles en mode paquet, procédé dans lequel une procédure est mise en oeuvre pour le ré-attachement au réseau d'une station mobile implicitement détachée du réseau, ladite procédure pour le ré-attachement au réseau de la station mobile comportant des étapes selon lesquelles :
- à réception d'une requête de mise à jour de zone de routage transmise par une station mobile, le réseau envoie un message de rejet de mise à jour de zone de routage incluant une cause de rejet correspondant à un détachement implicite,
- la station mobile ne doit pas alors tenter de se ré-attacher au réseau, sauf pour une transaction pour une requête d'accès à des services.

Un autre objet de la présente invention est une station mobile, comportant des moyens pour mettre en oeuvre un tel procédé.

Un autre objet de la présente invention est une entite de réseau, notamment une entité de réseau en charge de gestion de mobilité telle que notamment une entité de type SGSN, comportant des moyens pour mettre en oeuvre l'un et/ou l'autre de tels procédés.

D'autres objets et caractéristiques de la présente invention apparaîtront à la lecture de la description suivante d'exemples de réalisation, faite en relation avec les dessins ci-annexés dans lesquels:
- la figure 1 rappelle l'architecture générale d'un système de radiocommunications mobiles en mode paquet,
- la figure 2 est un diagramme rappelant les différents états de gestion de mobilité, ainsi que les transitions entre états, dans un tel système,
- les figures 4 à 6 sont destinées à illustrer des exemples de procédés suivant la présente invention.

Suivant un de ses différents aspects, la présente invention propose un nouveau critère pour détacher implicitement du réseau une station mobile.

Suivant un autre de ses différents aspects, la présente invention propose un nouveau critère pour ré-attacher au réseau une station mobile une fois qu'elle a été implicitement détachée du réseau.

Suivant un autre de ses différents aspects, la présente invention propose un mécanisme de régulation permettant de mettre en oeuvre l'un et/ou l'autre de ces critères seulement dans le cas où des ressources mémoire et/ou des ressources de traitement commencent à manquer dans le réseau.

Ces différents aspects de l'invention peuvent être illustrés au moyen d'un exemple de mise en oeuvre de la présente invention.

Lorsque le SGSN commence à manquer de ressources mémoire pour enregistrer des contextes de mobilité, un mécanisme de régulation est déclenché, pour détacher implicitement des stations mobiles attachées au réseau mais inactives. Avantageusement, les contextes de mobilité établis pour ces stations mobiles sont effacés, et les ressources mémoire correspondantes peuvent alors être utilisées pour enregistrer des contextes de mobilité pour des stations mobiles actives, susceptibles de générer du trafic utile.

A titre d'exemple le critère de régulation peut, pour un SGSN, être fonction du rapport du nombre de stations mobiles attachées, à la capacité maximale du SGSN.

A titre d'exemple, ce mécanisme de régulation peut être :
- déclenché lorsque le nombre total de contextes de mobilité enregistrés devient supérieur à un premier seuil prédéterminé, correspondant à un seuil haut,
- stoppé lorsque le nombre total de contextes de mobilité enregistrés devient inférieur à un deuxième seuil prédéterminé, correspondant à un seuil bas.

Notamment, une station mobile peut être considérée comme inactive si elle n'est pas susceptible de générer du trafic utile.

A titre d'exemple, un critère d'inactivité peut être considéré comme vérifié pour une station mobile s'il n'y a pas au moins un contexte PDP actif pour cette station mobile.

A titre d'exemple, ledit critère d'inactivité peut être considéré comme n'étant pas vérifié pour une station mobile, si un contexte PDP actif pour cette station mobile est de type signalisation pour l'IMS (« IP Multimedia Subsystem »), comme indiqué par exemple dans l'élément d'information QoS (« Quality of Service ») ou dans le champ PCO (« PDP Configuration Options ») du message « Create PDP context ».

Par exemple, la décision de détacher implicitement une station mobile inactive peut être prise à la réception par le SGSN d'une requête de mise à jour de localisation (ou « RAU Request ») normale ou périodique, transmise par la station mobile, et le détachement lui-même peut être différé jusqu'au passage par l'état « Standby ». Le fait de différer le détachement implicite au retour à l'état « Standby » a notamment pour avantage de permettre de traiter des procédures dites « MS Information » ou « MM Information » (telles que décrites notamment dans la spécification 3GPP TS 29.018), en réponse à une requête venant du MSC (« Mobile Switching Center ») sur l'interface « Gs » entre MSC et SGSN, et qui nécessitent de connaître le contexte MM.

Par exemple :
- à réception d'une requête RAU pour une station mobile attachée au réseau mais inactive, le SGSN traite cette requête RAU de manière habituelle, et met un indicateur associé à cette station mobile, à une valeur indiquant qu'un processus est en cours pour un détachement implicite de cette station mobile,
- ensuite, lorsque la station mobile passe dans l'état « Standby », le SGSN détache implicitement cette station mobile.

On notera par ailleurs que pour fonctionner avec l'interface « Gs », une station mobile détachée implicitement est détachée « localement », en d'autres termes cette action du SGSN n'est pas indiquée au MSC sur l'interface « Gs ». Ainsi, une demande ultérieure de « paging » (ou recherche d'abonné) pour des services en mode circuit ou CS (pour « Circuit Switched ») pourra être traitée. Il est recommandé dans ce cas que le MSC fournisse l'élément d'information correspondant à la zone de localisation ou LA (pour « Location Area »), élément d'information optionnel sur l'interface « Gs » de manière à éviter d'envoyer des messages de « paging » dans tout le SGSN.

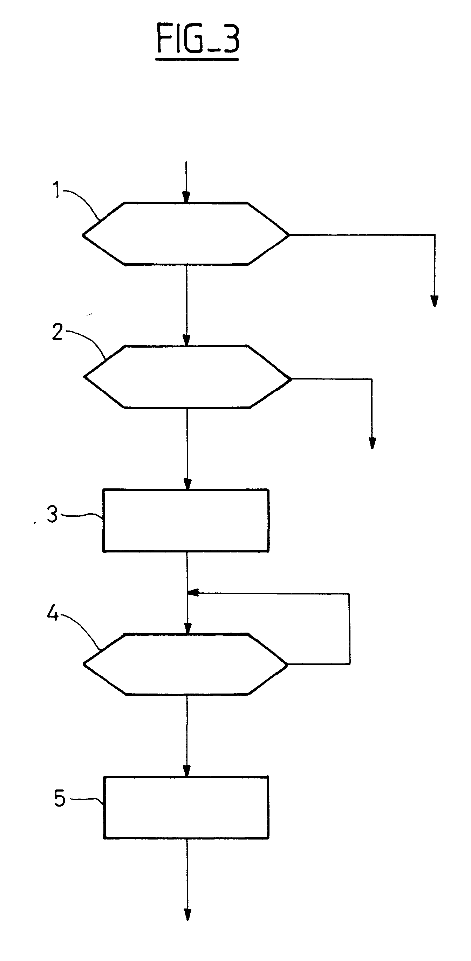

Un exemple de procédé suivant l'invention peut comporter les étapes illustrées sur la figure 3.

Le procédé illustré sur la figure 3 comporte une étape 1 dans laquelle on détecte si un premier critère est vérifié, correspondant à un manque de resources mémoire dans le réseau pour enregistrer des contextes de mobilité.

Si ce premier critère n'est pas vérifié, les étapes suivantes illustrées sur la figure 3 ne sont pas mises en oeuvre, et la gestion de mobilité peut s'effectuer de manière habituelle.

Si ce premier critère est vérifié, on passe à une étape 2 dans laquelle on détecte si un deuxième critère est vérifié pour au moins une station mobile, correspondant à un critère d'inactivité de cette station mobile.

Si ce deuxième critère n'est pas vérifié, les étapes suivantes illustrées sur la figure 3 ne sont pas mises en oeuvre, et la gestion de mobilité peut s'effectuer de manière habituelle.

Si ce deuxième critère est vérifié, dans une étape 3 on prépare le détachement implicite de cette station mobile, puis dans une étape 4 on détecte si un troisième critère est vérifié, correspondant au passage de cette station mobile par l'état « Standby ».

Lorsque ce troisième critère est vérifié, dans une étape 5 on procède au détachement implicite de cette station mobile.

Les étapes 1 à 5 peuvent être mises en oeuvre dans une entité de réseau, notamment une entité en charge de gestion de mobilité, telle que notamment une entité de type SGSN.

Un des objets de la présente invention est d'ailleurs une telle entité de réseau, comportant des moyens pour mettre en oeuvre un tel procédé, par exemple les étapes illustrées sur la figure 3.

Le ré-attachement au réseau de stations mobiles implicitement détachées peut être traité de manière habituelle, c'est-à-dire selon l'état actuel de la norme, c'est-à-dire incluant des étapes selon lesquelles :
- à réception d'une requête RAU transmise par une station mobile, le SGSN envoie un message de rejet de mise à jour de zone de routage (ou « RAU reject ») incluant la cause de rejet « Implicitly detached »,
- la station mobile doit alors mettre en oeuvre une nouvelle procédure d'attachement au réseau.

Le ré-attachement au réseau de stations mobiles implicitement détachées peut aussi être traité selon une autre approche, telle que proposée par la présente invention, selon laquelle un tel ré-attachement ne devrait être effectué que pour des stations mobiles pour laquelle au moins un critère d'activité est vérifié.

Notamment, une station mobile peut être considérée comme active si elle est susceptible de générer du trafic utile.

A titre d'exemple, un critère d'activité peut être considéré comme vérifié pour une station mobile, si la station mobile tente une transaction avec le réseau pour une requête d'accès à des services (c'est-à-dire une transaction autre qu'une transaction liée à la gestion de mobilité).

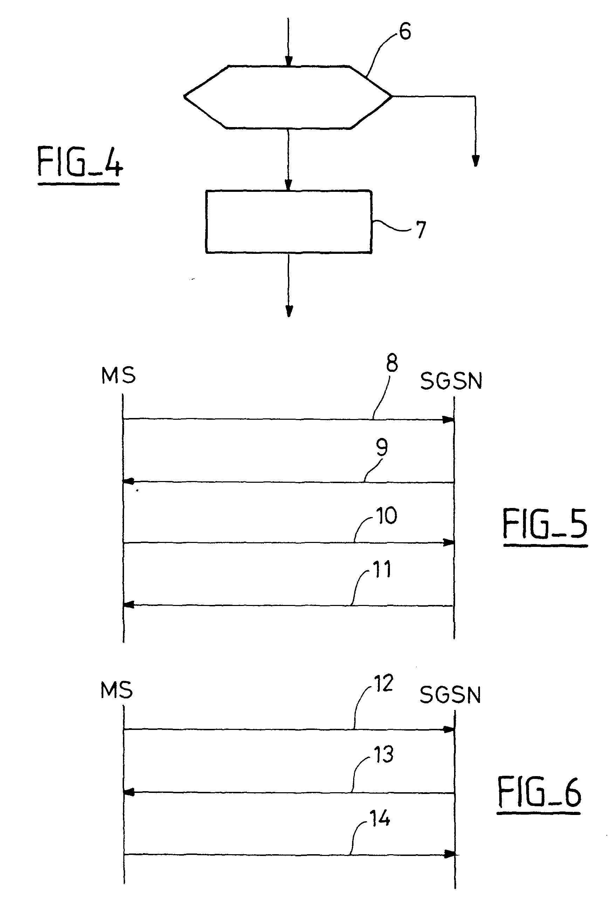

Ainsi, un exemple de procédé suivant l'invention peut comporter les étapes illustrées sur la figure 4.

Le procédé illustré sur la figure 4 comporte une étape 6 dans laquelle on détecte si un critère est vérifié, correspondant à un critère d'activité d'au moins une station mobile implicitement détachée du réseau.

Si ce critère n'est pas vérifié, l'étape suivante illustrée sur la figure 4 n'est pas mise en oeuvre, et le traitement peut s'effectuer de manière habituelle.

Si ce critère est vérifié, on passe à une étape 7 dans laquelle on met en oeuvre une procédure pour le ré-attachement de cette station mobile.

Les étapes 6 et 7 peuvent être mises en oeuvre dans une entité de réseau, notamment une entité en charge de gestion de mobilité, telle que notamment une entité de type SGSN.

Un des objets de la présente invention est d'ailleurs une telle entité de réseau, comportant des moyens pour mettre en oeuvre un tel procédé, par exemple les étapes illustrées sur la figure 4.

Suivant un exemple, tel qu'illustré sur la figure 5, on peut par exemple prévoir les étapes suivantes pour la procédure de ré-attachement au réseau:
- à réception d'une requête RAU transmise dans une étape 8 par une station mobile MS, le SGSN envoie à la station mobile MS, dans une étape 9, un message d'acceptation de mise à jour de zone de routage (ou « RAU accept »),
- lorsque, dans une étape 10, la station mobile MS tente ensuite une transaction avec le réseau pour une requête d'accès à des services le SGSN transmet à la station mobile MS, dans une étape 11, un message incluant une requête de ré-attachement au réseau, forçant ainsi la station mobile à se ré-attacher au réseau pour cette transaction.

En outre, le message « RAU accept » peut être envoyé sans chiffrement, de manière à pouvoir « comprendre » sélectivement les demandes de service ultérieures.

Par exemple, le message incluant une requête de ré-attachement au réseau peut être une requête de détachement (ou « Detach request ») incluant un type de détachement (ou « Detach type ») correspondant à un ré-attachement requis (ou « Re-attach required »).

Suivant un autre exemple, tel qu'illustré sur la figure 6, on peut par exemple prévoir les étapes suivantes pour la procédure de ré-attachement au réseau:
- à réception d'une requête RAU transmise dans une étape 12 par une station mobile MS, le SGSN envoie à la station mobile MS, dans une étape 13, un message de rejet de mise à jour de zone de routage (ou « RAU reject ») incluant la cause de rejet « Implicitly detached »
- la station mobile MS ne doit pas alors tenter de se ré-attacher au réseau, sauf pour une transaction pour une requête d'accès à des services, telle qu'illustrée par une étape 14.

Un des objets de la présente invention est une entité de réseau, notamment de type SGSN, comportant des moyens pour mettre en oeuvre un tel procédé, par exemple les étapes illustrées sur la figure 5 ou la figure 6.

Suivant un aspect de l'invention, une entité de réseau peut notamment comporter des moyens pour détacher implicitement du réseau une station mobile si au moins un critère est vérifié, correspondant à un critère d'inactivité de cette station mobile.

Ledit critère d'inactivité peut être vérifié pour une station mobile, si cette station mobile n'est pas susceptible de générer du trafic utile.

Ledit critère d'inactivité peut être vérifié , si aucun contexte PDP n'est actif pour cette station mobile.

Ledit critère d'inactivité peut ne pas être vérifié pour une station mobile, si un contexte PDP actif pour cette station mobile est de type signalisation pour l'IMS (« IP Multimedia Subsystem »).

Une entité de réseau peut également comporter des moyens pour détacher implicitement du réseau une station mobile si en outre un autre critère est vérifié, correspondant à un manque de ressources mémoire dans le réseau pour enregistrer des contextes de gestion de mobilité.

Une entité de réseau peut également comporter des moyens pour détacher implicitement du réseau une station mobile si en outre un autre critère est vérifié, correspondant au passage par un état de gestion de mobilité correspondant à un état « Standby ».

Suivant un autre aspect de l'invention, une entité de réseau peut notamment comporter des moyens pour mettre en oeuvre une procédure pour le ré-attachement au réseau d'une station mobile implicitement détachée du réseau, si au moins un critère est vérifié, correspondant à un critère d'activité de cette station mobile.

Ledit critère d'activité peut être vérifié pour une station mobile, si cette station mobile est susceptible de générer du trafic utile.

Ledit critère d'activité peut être vérifié , si le réseau reçoit de cette station mobile une requête d'accès à des services.

Suivant un autre aspect de l'invention, une entité de réseau peut notamment comporter, pour mettre en oeuvre une procédure pour le ré-attachement au réseau d'une station mobile implicitement détachée du réseau :
- des moyens pour, à réception d'une requête de mise à jour de zone de routage transmise par une station mobile, transmettre à la station mobile un message d'acceptation de mise à jour de zone de routage,
- des moyens pour, lorsque la station mobile tente ensuite une transaction avec le réseau pour une requête d'accès à des services, transmettre à la station mobile un message incluant une requête de ré-attachement au réseau, forçant ainsi la station mobile à se ré-attacher au réseau pour cette transaction.

Ledit message incluant une reqête de ré-attachement au réseau peut correspondre à une requête de détachement (« Detach request ») incluant un type de détachement (« Detach type ») correspondant à un re-attachement requis (« Re-attach required »).

Un des objets de la présente invention est également une station mobile, comportant des moyens pour mettre en oeuvre un tel procédé, par exemple les étapes illustrées sur la figure 5 ou la figure 6.

Suivant un aspect de l'invention, une station mobile peut notamment comporter :
- des moyens pour, à réception d'un message de rejet de mise à jour de zone de routage incluant une cause de rejet correspondant à un détachement implicite, ne pas tenter de se ré-attacher au réseau, sauf pour une transaction pour une requête d'accès à des services.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour améliorer la gestion de mobilité dans un système de communications mobiles en mode paquet, procédé dans lequel une station mobile attachée au réseau est implicitement détachée du réseau si au moins un critère est vérifié, correspondant à un critère d'inactivité de cette station mobile.

2. Procédé selon la revendication 1, procédé dans lequel une station mobile attachée au réseau est implicitement détachée du réseau si en outre un autre critère est vérifié, correspondant à un manque de ressources mémoire dans le réseau pour enregistrer des contextes de gestion de mobilité.

3. Procédé selon l'une des revendications 1 ou 2, dans lequel ledit critère d'inactivité est vérifié pour une station mobile, si cette station mobile n'est pas susceptible de générer du trafic utile.

4. Procédé selon l'une des revendications 1 à 3, dans lequel ledit critère d'inactivité est vérifié , si aucun contexte PDP n'est actif pour cette station mobile.

5. Procédé selon l'une des revendications 1 à 4, dans lequel ledit critère d'inactivité n'est pas vérifié pour une station mobile, si un contexte PDP actif pour cette station mobile est de type signalisation pour l'IMS (« IP Multimedia Subsystem »).

6. Procédé selon l'une des revendications 1 à 5, procédé dans lequel une station mobile attachée au réseau est implicitement détachée du réseau si en outre un autre critère est vérifié, correspondant au passage par un état de gestion de mobilité correspondant à un état « Standby ».

7. Procédé pour améliorer la gestion de mobilité dans un système de communications mobiles en mode paquet, procédé dans lequel une procédure est mise en oeuvre pour le ré-attachement au réseau d'une station mobile implicitement détachée du réseau si au moins un critère est vérifié, correspondant à un critère d'activité de cette station mobile.

8. Procédé selon la revendication 7, dans lequel ledit critère d'activité est vérifié pour une station mobile, si cette station mobile est susceptible de générer du trafic utile.

9. Procédé selon l'une des revendications 7 ou 8, dans lequel ledit critère d'activité est vérifié , si le réseau reçoit de cette station mobile une requête d'accès à des services.

10. Procédé pour améliorer la gestion de mobilité dans un système de communications mobiles en mode paquet, procédé dans lequel une procédure est mise en oeuvre pour le ré-attachement au réseau d'une station mobile implicitement détachée du réseau, procédé dans lequel ladite procédure pour le ré-attachement au réseau de la station mobile comporte des étapes selon lesquelles :
- à réception d'une requête de mise à jour de zone de routage transmise par une station mobile, ladite entité de réseau envoie un message d'acceptation de mise à jour de zone de routage,
- lorsque la station mobile tente ensuite une transaction avec le réseau pour une requête d'accès à des services, ladite entité transmet à la station mobile un message incluant une requête de ré-attachement au réseau, forçant ainsi la station mobile à se ré-attacher au réseau pour cette transaction.

11. Procédé selon la revendication 10, dans lequel ledit message incluant une reqête de ré-attachement au réseau correspond à une requête de détachement (« Detach request ») incluant un type de détachement (« Detach type ») correspondant à un re-attachement requis (« Re-attach required »).

12. Procédé pour améliorer la gestion de mobilité dans un système de communications mobiles en mode paquet, procédé dans lequel une procédure est mise en oeuvre pour le ré-attachement au réseau d'une station mobile implicitement détachée du réseau, procédé dans lequel ladite procédure pour le ré-attachement au réseau de la station mobile comporte des étapes selon lesquelles :
- à réception d'une requête de mise à jour de zone de routage transmise par une station mobile, ladite enité de réseau envoie un message de rejet de mise à jour de zone de routage incluant une cause de rejet correspondant à un détachement implicite,
- la station mobile ne doit pas alors tenter de se ré-attacher au réseau, sauf pour une transaction pour une requête d'accès à des services.

13. Entite de réseau de communications mobiles, notamment de type SGSN, comportant des moyens pour mettre en oeuvre un procédé selon l'une des revendications 1 à 12.

14. Entité de réseau de communications mobiles, notamment de type SGSN, comportant des moyens pour détacher implicitement du réseau une station mobile si au moins un critère est vérifié, correspondant à un critère d'inactivité de cette station mobile.

15. Entité de réseau de communications mobiles selon la revendication 14, comportant des moyens pour détacher implicitement du réseau une station mobile si en outre un autre critère est vérifié, correspondant à un manque de ressources mémoire dans le réseau pour enregistrer des contextes de gestion de mobilité.

16. Entité de réseau de communications mobiles selon l'une des revendications 14 ou 15, comportant des moyens pour détacher implicitement du réseau une station mobile si en outre un autre critère est vérifié, correspondant au passage par un état de gestion de mobilité correspondant à un état « Standby ».

17. Entité de réseau de communications mobiles, notamment de type SGSN, comportant des moyens pour mettre en oeuvre une procédure pour le ré-attachement au réseau d'une station mobile implicitement détachée du réseau, si au moins un critère est vérifié, correspondant à un critère d'activité de cette station mobile.

18. Entité de réseau de communications mobiles, notamment de type SGSN, comportant, pour mettre en oeuvre une procédure pour le ré-attachement au réseau d'une station mobile implicitement détachée du réseau :
- des moyens pour, à réception d'une requête de mise à jour de zone de routage transmise par une station mobile, transmettre à la station mobile un message d'acceptation de mise à jour de zone de routage,
- des moyens pour, lorsque la station mobile tente ensuite une transaction avec le réseau pour une requête d'accès à des services, transmettre à la station mobile un message incluant une requête de ré-attachement au réseau, forçant ainsi la station mobile à se ré-attacher au réseau pour cette transaction.

19. Station mobile, comportant des moyens pour mettre en oeuvre un procédé selon l'une des revendications 7 à 12.

20. Station mobile, comportant :
- des moyens pour, à réception d'un message de rejet de mise à jour de zone de routage incluant une cause de rejet correspondant à un détachement implicite, ne pas tenter de se ré-attacher au réseau, sauf pour une transaction pour une requête d'accès à des services.
